Europäisches Patentamt

European Patent Office

Office européen des brevets

(11) Publication number: **0 212 335**
**A2**

## (12) EUROPEAN PATENT APPLICATION

(21) Application number: 86110278.8

(51) Int. Cl.⁴: **G06F 3/12**

(22) Date of filing: 25.07.86

(30) Priority: 16.08.85 JP 179567/85

(43) Date of publication of application:
04.03.87 Bulletin 87/10

(84) Designated Contracting States:
DE FR GB

(71) Applicant: International Business Machines
Corporation
Old Orchard Road
Armonk, N.Y. 10504(US)

(72) Inventor: Tanaka, Shuhei
1432-59, Chogo
Fujisawa-shi Kanagawa-ken(JP)

(74) Representative: Suringar, Willem Joachim
Intellectual Property Department IBM
Nederland N.V. Watsonweg 2
NL-1423 ND Uithoorn(NL)

(54) Printer, and printer characteristics identifying system.

(57) In a system wherein a printer 1 is connected to
a processor 2 by an interface 3 having status signal
lines 4 for transmitting status signals from said print-
er to said processor, but not having data lines from
said printer to said processor, said printer is pro-
vided with the combination of a store means 6 for
storing printer characteristics data, a decode means
7 for decoding a Read Printer Charateristics Data
command signal from said processor, and a means
8 responsive to said decode means, for setting said
status signal lines 4 in a Printer Characteristics Data
Transmission mode to transmit the said printer char-
acteristics data to said processor 2.

FIG. 3

# PRINTER, AND PRINTER CHARACTERISTICS IDENTIFYING SYSTEM

## Field of the Invention

The present invention relates to a printer adapted to enable a processor, to which said printer is connected by a convential interface, to identify the characteristics of said printer.

## Prior Art

In the field of the information processing systems, showing a remarkable progress day by day, there have been developed various types of printers, each type having various functions and capacities.

When such printers are connected to processors such as personal computers, if the processors could not identify the characteristics of the printers, such as the types, functions, capacities and so on thereof, the printers probably would not be operated properly and would produce inadequate printout.

Accordingly, it has been necessary, heretofore, that a predetermined type of printer should be connected to a processor or the data of the characteristics of a printer should be input into the processor through a keyboard when the printer is connected to the processor.

In order to remove such inconvenience, there has been considered a system which is capable of identifying automatically the type of a printer without necessitating any intervention by an operator. In the system, the data of a predetermined number of types of printers which can be connected to a given processor are stored in the processor. When a printer is connected to the processor, the processor makes a sequence of inquiries as to the type of the printer, such as "Is the printer Type A?", "Is the printer Type B?", and so on, until the response of "Yes" is obtained from the printer, in order to identify the type of the printer. Since such a printer generally employs a parallel interface of the Centronics Standard, the inquiries are made through a data signal line, but the responses of "Yes" and "No" are made through a status signal line which produces binary ON and OFF signals.

However, in the above described system, there exists a problem that the processor can identify the type of the printer but not the functions nor the capacities thereof. In order to solve the problem, the processor would require a large storage capacity for storing the data of the functions and capacities of printers as well as their types. Further, when a new printer is developed, the printer could not be operated properly unless the type of the printer is stored.

Japanese Unexam. Pub. Patent Appln. No. 209522/82 discloses a system wherein data are transmitted bidirectionally between a processor and an I/O unit in order to identify the type and functions of the I/O unit. The system which requires a bidirectional data bus would be quite expensive to be employed in a printer. Further, it would be of much inconvenience that a printer having an interface of the Centronics Standard which has a unidirectional data bus only cannot be connected to the system.

## Summary of the Invention

Accordingly, it is an object of the present invention to provide a printer adapted to remove the inconvenience, experienced by an operator in the past, by enabling a processor, to which said printer is connected, to identify automatically the characteristics of said printer.

It is another object of the present invention to provide adaption means for a printer which enables a processor to identify the characteristics of a conventional printer employing an interface which has no data signal line for transmitting a data signal from said printer to said processor, without increasing the number of the signal lines.

The present invention, as claimed, provides a printer characterized in that the data of the characteristics of the printer, such as the type, functions, capacities and so on thereof, are stored in the printer, and a status signal line is set in the printer characteristics data transmitting mode in response to a read printer characteristics data command signal from a processor, and the status signal line which normally transmits an ON or OFF status signal is used for transmitting said printer characteristics data.

## Brief Description of the Drawings

FIG. 1 shows a block diagram illustrating a preferred embodiment of a printer, and a printer characteristics identifying system according to the present invention.

FIG. 2 shows a schematic diagram illustrating a printer characteristics identifying procedure.

FIG. 3 shows a block diagram of the system of FIG.1 illustrating the configuration of the processor more in detail.

FIG. 4 shows a block diagram illustrating a network system wherein a plurality of processors not having a printer and one processor having a printer are interconnected.

FIG. 5 shows a block diagram illustrating another network system wherein a plurality of processors not having a printer and a further plurality of processors each having a printer are interconnected.

Detailed Description of Preferred Embodiment

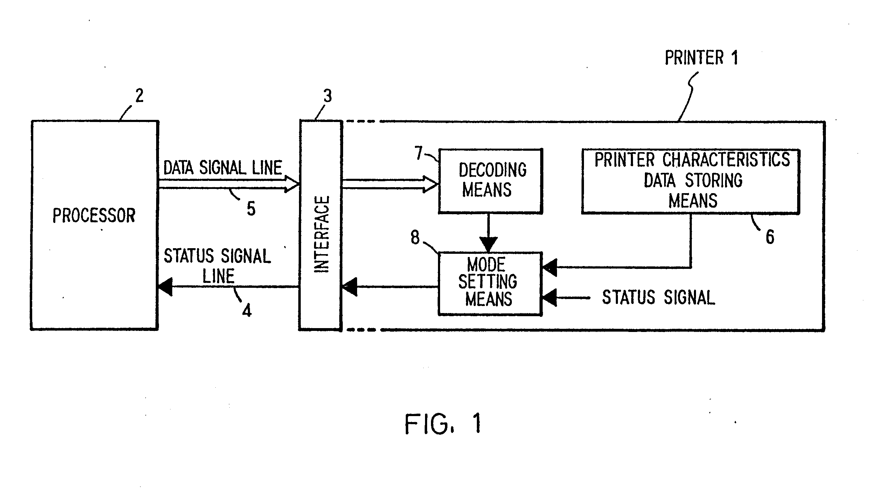

As shown in FIG. 1, a printer 1 which is equipped according to the present invention is employed in a system wherein the printer 1 is connected to a processor 2 by an interface 3 having a status signal line 4 for transmitting a status signal from said printer 1 to said processor 2 , but no data signal line for transmitting a data signal from said printer to said processor. The printer 1 comprises means 6 for storing the data of the characteristics of said printer, means 7 for decoding a read printer characteristics data command signal transmitted from said processor 2 through a data signal line 5, and means 8 for setting said status signal line 4 in the printer characteristics data transmitting mode in response to said read printer characteristics data command signal to transmit said printer characteristics data, instead of a status signal, to said processor 2 through said status signal line 4. Although the interface 3 is generally provided integrally with the printer 1, it may be provided separately. Also, a single status signal line or a plurality of status signal lines may be provided which can be used for transmitting the printer characteristics data.

Since most of the presently used printers have a parallel interface of the Centronics Standard with 36 pins, the present invention will be described more in detail with reference to an embodiment of a printer with such a parallel interface. The interface has 8 data signal lines for transmitting one byte of data in parallel from a processor to the printer. However, no data signal line is provided for transmitting a data signal from the printer to the processor, since it is not necessary to transmit data from the printer to the processor as opposed to other I/O devices. Instead, some status signal lines are provided which respectively transmit an ON or OFF signal from the printer to the processor as determined according to the protocol for transmitting various statuses of the printer to the processor. They include an acknowledgement (ACK) signal line which indicates that the printer has received data, a busy signal line which indicates that the printer cannot receive further data (the printer is busy), a paper end signal line which indicates that paper has been exhausted, and so on. However, the interface has no signal line for transmitting the data of the characteristics of the printer such as the type, functions, capacities and so on thereof to the processor.

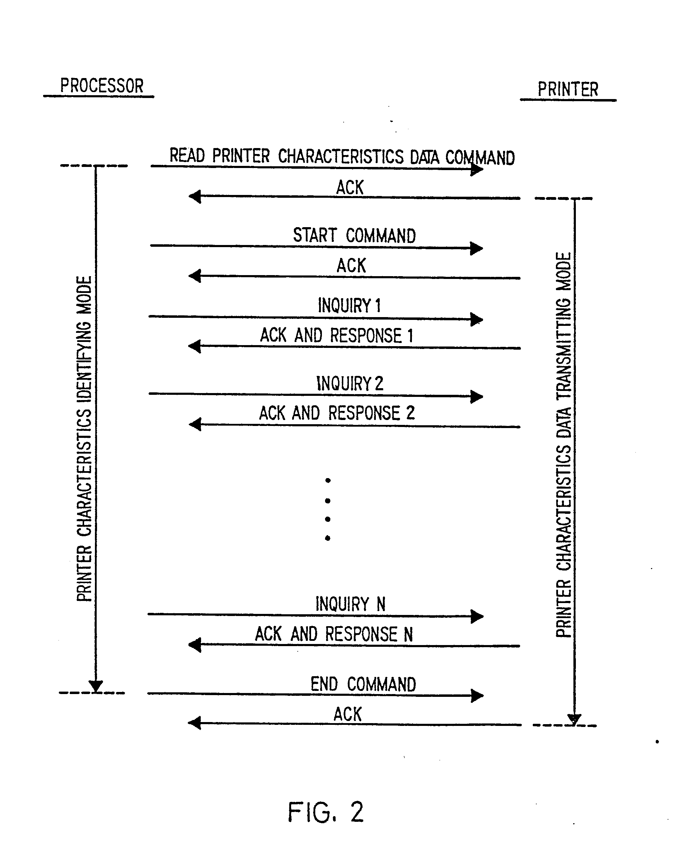

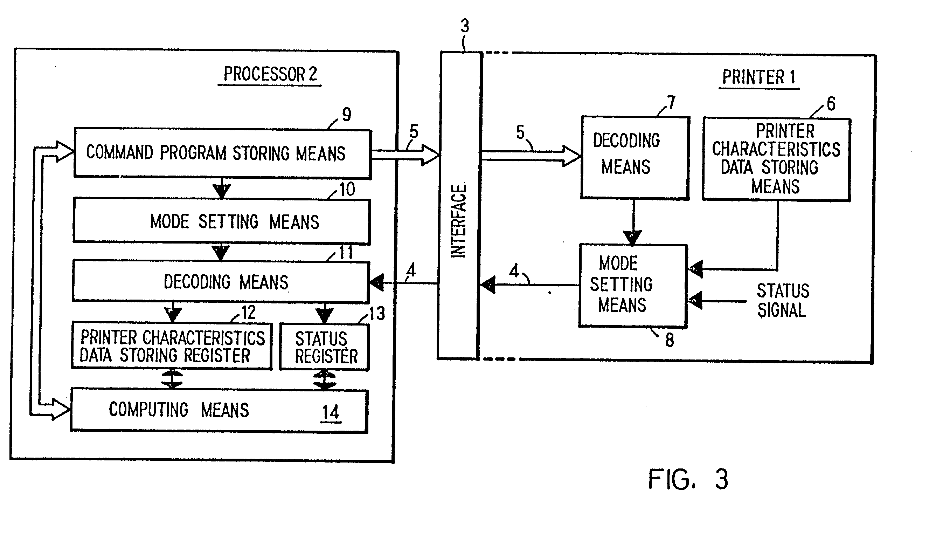

In an embodiment of the present invention, as shown in FIGS. 2 and 3, when the printer 1 is being connected to the processor 2 and the power source of the printer 1 is turned on, the processor 2 calls and executes a read printer characteristics data program from a command program storing means 9 of the processor 2 and sets a mode setting means 10 of the processor 2 in the printer characteristics identifying mode, and simultaneously, transmits a read printer characteristics data command signal to the printer 1 through the data signal lines 5 as a hexadecimal code signal. The code signal is transmitted to the decoding means 7 of the printer 1 by the interface 3 and decoded as a read printer characteristics data command. Then, the printer 1 is set in the printer characteristics data transmitting mode by the mode setting means 8 and transmits an ACK signal to the processor 2 through the status signal lines 4. Upon receipt of the ACK signal, the processor 2 transmits a start command to the printer 1 according to said read printer characteristics data program, and after receiving the ACK signal corresponding thereto, transmits sequentially a desired set of possible inquiries 1, 2, ... through N, (N <256, e.g.).

The inquiries may be made either in such a manner that each answer follows each inquiry or in such a manner that all the answers follow all the inquiries.

With the mode setting means 8 having been set in the printer characteristics data transmitting mode, the printer 1 transmits the printer characteristics data stored in the printer characteristics data storing means 6 to the processor 2 through the status signal lines 4 rather than transmitting a status signal therethrough. In the present invention, the printer characteristics data storing means 6 is provided in the printer 1 rather than in the processor 2, and may be, for example, a read only memory cartridge (an external memory removably connected to the printer 1) which is now commercially available.

The processor 2 decodes a signal transmitted through the status signal lines 4 by a decoding means 11 which has been set in the printer characteristics identifying mode by the mode setting means 10 and switched in the signal decoding protocol. The decoding means 11 may include a table from which the signal decoding protocol could be read out using the command codes of the respective inquiries as the addresses of said protocol. The results of the decoding are stored in a printer characteristics data storing register 12. Thereafter, using the contents stored in said printer characteristics data storing register 12 and a printer control program stored in the processor 2, computing means 14 of the processor 2 controls the printing of the printer 1. Alternatively, the printing of the printer 1 may be controlled by initially storing only the read printer characteristics data program in the processor 2, and then reading and storing a selected printer control program from an external memory into the processor 2 according to the printer characteristics data read and stored from the printer 1 into the processor 2 under said read printer characteristics data program initially stored in the processor 2.

After the printer 1 has answered all the code signals of various inquiries 1 through N from the processor 2, the processor 2 transmits an end command code signal to the printer 1. Then, the printer 1 resets the printer characteristics data transmitting mode and transmits an ACK signal to the processor 2, thereby causing the printer characteristics identifying mode in the processor 2 to be ended. Thereafter, the mode setting means 8 of the printer 1 resumes the normal status signal transmitting mode and the normal status signals are transmitted to the processor 2. In the processor 2, the transmitted signals are decoded as the normal status signals by the decoding means 11 and stored in a status register 13 for normally controlling the printing of the printer 1. It should be understood, that the means 10-13 shown in the processor 2 of FIG.3 could be either dedicated hardware means, or software means or a suitable mixture of both.

In a most preferred embodiment, among a plurality of status signal lines, four status signal lines, namely a head alarm signal line, an automatic sheet feed ON signal line, an automatic sheet feed jam signal line, and a cancel request signal line, may be set in the printer characteristics data transmitting mode. Further, a paper end signal line is used as an ACK signal line in the printer characteristics data transmitting mode. This ACK signal line is usually turned on in the printer characteristics data transmitting mode. However, if the printer 1 is of an old type where no means are provided for storing and reading the printer characteristics data, the ACK signal line is not turned on and thus acts to make the processor 2 aware that the printer cannot transmit the printer characteristics data and, therefore, requires to be controlled in printing as a printer of an old type.

The printer characteristics data which may be stored in the printer 1 to be inquired by the processor 2 include the type, functions, capacities and so on of said printer.

When an inquiry is made as to the type of the printer 1, it may be answered, for example in case of the IBM 5553 printer, by transmitting the data through said four status signal lines with the data divided into 5, 5, 5, and 3.

The functions of the printer 1 may be the types of the control codes which can be used in the printer, the bidirectional printing function of the printer, the number of the colors which' can be printed by the printer, the capabilities of the printer for printing the Kanji characters of the Group 1 or 2 of the the Japanese Industrial Standards or the characters of other fonts, and so on.

The capacities of the printer 1 may be the vertical and horizontal dimensions of a character box, the size of the paper sheet which can be used, the resolution, the distance between dots, and so on in the printing by the printer 1.

Further, the printer characteristics data of the printing mechanism of the printer 1, such as a wire type, a belt type, a laser beam type, a plotter type and so on, may also be identified by the processor 2.

The four status signal lines can transmit four bits of data at one time, so that one combination thereof has one content, but can also be employed arbitrarily so that each of them has different content, and so on. This is accomplished by arbitrarily setting the protocol between the printer 1 and the processor 2.

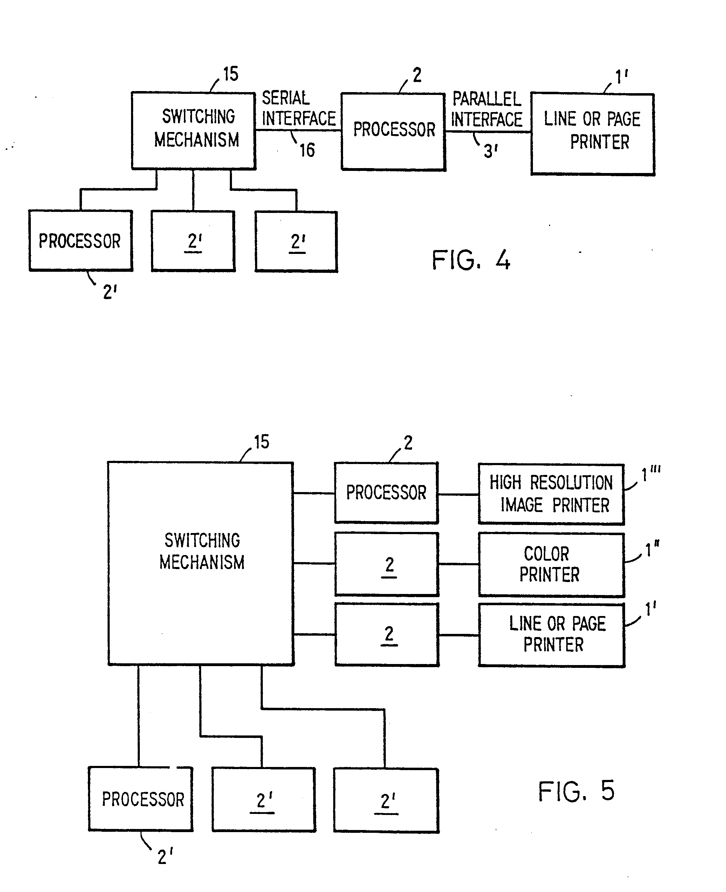

In this manner, when the characteristics data of a printer connected to a processor are stored through a parallel interface such as shown by 3 - (FIG. 3) and 3' (FIG. 4) into the processor, the processor can make the best use of the functions, capacities, and so on of the printer in printing. Further, as shown in Figures 4 and 5, when a plurality of processors are connected with each other through a switching mechanism 15, thereby comprising a network system, a processor 2' which is remote and has no printer can inquire sequentially the functions, capacities and so on of printers connected to other processors 2, which may be a line or page printer 1', a color printer 1", a high resolution image printer 1"', and so on, to select a printer which has the desired functions, capacities and so on for printing. Then, the processor 2' with no printer transmits the data to be printed to said processor 2 with the desired printer through a serial interface 16 to cause the data to be automatically printed by the printer.

The control mechanism of the present invention may be accomplished by microcodes.

## Advantages of the Invention

As described above, according to the present invention, it is quite advantageous that the printer characteristics data such as the type, functions, capacities and so on of a printer may be transmitted to a processor through existing status signal lines, without increasing the number of the signal lines, and it is especially advantageous that the present invention may be applied to the presently widely used printers having the parallel interfaces of the Centronics Standard. The time required for transmitting the printer characteristics data is short, on the order of 1 ms. Further, the present invention is very economical since the printer characteristics data such as the type, functions, capacities and so on of one printer only are required to be stored in the printer, as opposed to the cases of prior art where quite a large memory space has been required for a processor in order to store all the printer characteristics data such as the type, functions, capacities and so on of all the printers which may be connected to the processor. When a new type of printer has been developed, the processor can easily meet with such a printer, only by storing the new characteristics data in the printer since the read printer characteristics data program has already been stored in the processor.

## Claims

1. A printer (1) which is to be connected to a data processor (2) by an interface (3) having a status signal line (4) for transmitting a status signal from said printer to said processor, but no data signal line for transmitting a data signal from said printer to said processor, said printer characterized by comprising:

means (6) storing the data of the characteristics of said printer;

means (7) for decoding a read printer characteristics data command signal from said processor (2); and

means (8) for setting said status signal line (4) in a printer characteristics data transmitting mode in response to said read printer characteristics data command signal to transmit said stored printer characteristics data to said processor through said status signal line (4).

2. A printer as described in Claim 1, wherein:

said data of the characteristics of said printer include the type, functions, and capacities of said printer.

3. A data processing system wherein a printer - (1) is connected to a processor (2) by an interface - (3) having a status signal line for transmitting a status signal from said printer to said processor, but no data signal line for transmitting a data signal from said printer to said processor, incorporating a printer characteristics identifying system characterized by comprising:

means (9) provided in said processor (2) for storing a program for inquiring the data of the characteristics of any connected printer;

means (6) provided in said printer (1) for storing said printer characteristics data;

means (14, 5) provided in said processor (2) for executing said program and transmitting a read printer characteristics data command signal to said printer (1);

means (8, 10) for setting said printer and said processor in the read printer characteristics data mode in response to said read printer characteristics data command signal;

means (8, 7) provided in said printer for reading out said printer characteristics data from said storing means (6) and transmitting said data to said processor through said status signal line (4) in said read printer characteristics data mode; and

means (11, 12) provided in said processor (2) for storing said transmitted printer characteristics data in said processor.

4. A printer characteristics identifying system as described in Claim 3 wherein:

said setting means (8, 10) sets the signal decoding protocol of said processor (2) for said status signal line (4) in the printer characteristics identifying mode and sets said printer (1) in the printer characteristics data transmitting mode.

5. A printer characteristics identifying system as described in Claim 3 or 4, wherein:

a read only memory cartridge having said means - (6) for storing said printer characteristics data as a read only memory is removably connected to said printer (1).

6. A printer characteristics identifying system as described in any of Claims 3-5 , which is incorporated in a network system wherein a plurality of processors (2, 2') are interconnected, one or more of which are respectively connected with one or more printers and stored with the characteristics data of said one or more printers, and a particular processor (2') inquires sequentially or simultaneously said printer characteristics data stored in other processors until the printer characteristics data desired by said particular processor coincide with the characteristics data stored in one of said other processors, and said printer of said processor storing said coincided printer characteristics data prints out the data from said particular processor.

7. A process performed in a system wherein a printer is connected to a processor by an interface having a status signal line for transmitting a status signal from said printer to said processor, but no data signal line for transmitting a data signal from said printer to said processor, said process for identifying the characteristics of said printer to said processor comprising the steps of:

generating a read printer characteristics data command signal from said processor to said printer;

setting said processor and said printer in the read printer characteristics data mode in response to said read printer characteristics data command signal;

transmitting said printer characteristics data from said printer to said processor through said status signal line in said read printer characteristics data mode; and

storing said transmitted printer characteristics data in said processor for subsequently controlling said printer.

8. A printer (1) which is to be connected to a processor by an interface (3) having a status signal line (4) for transmitting a status signal from said printer to said processor, but no data signal line for transmitting a data signal from said printer to said processor, said printer characterized by comprising:

means (6) for storing data consisting of words or characters comprising a plurality of bits;

means (7) for decoding a read data command signal; and

means (8) for setting said status signal line (4) in a data transmitting mode to transmit said stored data words or characters to said processor through said status signal line in response to said read data command signal.

9. A printer as described in Claim 8, wherein:

a plurality of status signal lines (4) are provided through which the statuses having contents independent from each other are transmitted respectively with one bit, and in said data transmitting mode, said stored data words or characters consisting of a plurality of bits are transmitted in parallel.

JA 985.014

0 212 335

PRINTER 1

FIG. 1

PROCESSOR                                                                 PRINTER

READ PRINTER CHARACTERISTICS DATA COMMAND →

← ACK

START COMMAND →

← ACK

INQUIRY 1 →

← ACK AND RESPONSE 1

INQUIRY 2 →

← ACK AND RESPONSE 2

.
.
.
.
.

INQUIRY N →

← ACK AND RESPONSE N

END COMMAND →

← ACK

PRINTER CHARACTERISTICS IDENTIFYING MODE

PRINTER CHARACTERISTICS DATA TRANSMITTING MODE

FIG. 2

JA 985.014

JA 985.014

0 212 335

PROCESSOR 2

PRINTER 1

COMMAND PROGRAM STORING MEANS — 9

5

5

DECODING MEANS — 7

PRINTER CHARACTERISTICS DATA STORING MEANS — 6

MODE SETTING MEANS — 10

DECODING MEANS — 11

4

4

3

INTERFACE

MODE SETTING MEANS — 8

STATUS SIGNAL

PRINTER CHARACTERISTICS DATA STORING REGISTER — 12

STATUS REGISTER — 13

COMPUTING MEANS 14

FIG. 3

FIG. 4

FIG. 5